(19) Europäisches Patentamt
European Patent Office
Office européen des brevets

(11) **EP 2 479 590 B1**

(12) **FASCICULE DE BREVET EUROPEEN**

(45) Date de publication et mention
de la délivrance du brevet:
**17.07.2019 Bulletin 2019/29**

(51) Int Cl.:
***G01V 99/00*** (2009.01)

(21) Numéro de dépôt: **12290010.3**

(22) Date de dépôt: **10.01.2012**

(54) **Procédé pour mettre à jour un modèle de réservoir en temps réel à partir de données dynamiques tout en conservant sa cohérence avec les observations statiques**

Verfahren zur Aktualisierung eines Speichermodells in Echtzeit mit Hilfe von dynamischen Daten unter Beibehaltung seiner Kohärenz mit den statischen Beobachtungen

Method for updating a reservoir model in real time using dynamic data while maintaining the consistency of same with static observations

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2011 FR 1100170**

(43) Date de publication de la demande:
**25.07.2012 Bulletin 2012/30**

(73) Titulaire: **IFP Energies nouvelles
92500 Rueil-Malmaison (FR)**

(72) Inventeurs:
- **Heidari, Leila**
  **64000 Pau (FR)**
- **Gervais, Véronique**
  **92500 Rueil-Malmaison (FR)**
- **La Ravalec, Mickaele**
  **92500 Rueil-Malmaison (FR)**
- **Wackernagel, Hans**
  **77305 Fontainebleau (FR)**

(74) Mandataire: **IFP Energies nouvelles
Département Propriété Industrielle
Rond Point de l'échangeur de Solaize
BP3
69360 Solaize (FR)**

(56) Documents cités:
**WO-A2-2010/088516     FR-A1- 2 890 453
US-A1- 2007 118 346**

- **SEILER A ET AL: "Structural uncertainty modelling and updating by production data integration", SOCIETY OF PETROLEUM ENGINEERS - SPE/EAGE RESERVOIR CHARACTERIZATION AND SIMULATION CONFERENCE 2009 - OVERCOMING MODELING CHALLENGES TO OPTIMIZE RECOVERY - SOCIETY OF PETROLEUM ENGINEERS - SPE/EAGE RESERVOIR CHARACTERIZATION AND SIMULATION CONFERENCE, vol. 1, 2009, pages 1-19, XP002665286,**
- **ZHANG Y ET AL: "History matching using a hierarchical stochastic model with the ensemble kalman filter: A field case study", SPE RESERVOIR SIMULATION SYMPOSIUM PROCEEDINGS - SPE RESERVOIR SIMULATION SYMPOSIUM 2009 2009 SOCIETY OF PETROLEUM ENGINEERS USA, vol. 1, 2009, pages 1-15, XP002665287,**
- **COUTINHO E J R ET AL: "Conditioning multilayered geologic models to well-test and production-logging data using the ensemble Kalman Filter", PROCEEDINGS - SPE ANNUAL TECHNICAL CONFERENCE AND EXHIBITION - SOCIETY OF PETROLEUM ENGINEERS - SPE ANNUAL TECHNICAL CONFERENCE AND EXHIBITION 2010, ATCE 2010 2010 SOCIETY OF PETROLEUM ENGINEERS (SPE) USA, vol. 4, 2010, pages 1-19, XP002665288,**

## Description

La présente invention concerne le domaine technique de l'industrie pétrolière, et plus particulièrement l'exploitation de réservoirs souterrains, tels que des réservoirs pétroliers ou des sites de stockage de gaz.

En particulier, l'invention permet de modifier des représentations du réservoir, appelées modèles de réservoir, pour les rendre cohérentes avec les différentes données collectées sur le terrain.

L'optimisation et l'exploitation d'un gisement pétrolier reposent sur une description aussi précise que possible de la structure, des propriétés pétrophysiques, des propriétés des fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique. Un modèle de réservoir comporte un maillage ou grille, généralement tridimensionnelle, associée à une ou plusieurs cartes de propriétés pétrophysiques (porosité, perméabilité, saturation...). L'association consiste à attribuer des valeurs de ces propriétés pétrophysiques à chacune des mailles de la grille.

Ces modèles bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle de réservoir est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes. De la même façon, la modélisation des sites de stockages de $CO_2$ permet de surveiller ces sites, de détecter des comportements inattendus et de prédire le déplacement du $CO_2$ injecté.

Un modèle de réservoir a donc pour vocation de rendre compte, au mieux, de toutes les informations connues sur un réservoir. Un modèle de réservoir est représentatif lorsqu'une simulation de réservoir fournit des réponses numériques très proches des données d'historique déjà observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement.

Pour ce faire, l'intégration de toutes les données disponibles est indispensable. Ces données comprennent en général :

-   des mesures en certains points de la formation géologique de la propriété modélisée, par exemple dans des puits. Ces données sont dites statiques car elles sont invariables dans le temps (à l'échelle des temps de la production du réservoir) et sont directement liées à la propriété d'intérêt.

-   des "données d'historique", comprenant des données de production, par exemple les débits de fluide mesurés aux puits, les concentrations de traceurs et des données issues de campagnes d'acquisition sismique répétées à des temps successifs. Ces données sont dites dynamiques car elles évoluent en cours d'exploitation et sont indirectement liées aux propriétés attribuées aux mailles du modèle de réservoir.

Les données statiques disponibles sont utilisées pour définir des fonctions aléatoires pour chaque propriété pétrophysique comme la porosité ou la perméabilité. Une représentation de la répartition spatiale d'une propriété pétrophysique est une réalisation d'une fonction aléatoire. De façon générale, une réalisation est générée à partir d'une part d'une moyenne, d'une variance et d'une fonction de covariance qui caractérise la variabilité spatiale de la propriété étudiée et d'autre part d'un germe ou d'une série de nombres aléatoires. De nombreuses techniques de simulation existent comme la méthode de simulation séquentielle Gaussienne, la méthode de Cholesky ou encore la méthode FFT-MA.

-   Goovaerts,P., 1997, Geostatistics for natural resources evaluation, Oxford Press, New York, 483 p.

-   Le Ravalec, M., Noetinger B., and Hu L.-Y., 2000, The FFT moving average (FFT-MA) generator: an efficient numerical method for generating and conditioning Gaussian simulations, Mathematical Geology, 32(6), 701-723.

Les techniques d'intégration des données dynamiques (production et/ou sismique 4D) dans un modèle de réservoir sont bien connues des spécialistes : ce sont des techniques dites de "calage d'historique" ("history-matching" en anglais).

Le calage d'historique consiste à modifier les paramètres d'un modèle de réservoir, tels que les perméabilités, les porosités ou les skins de puits (représentant les endommagements autour du puits), les connections de failles..., pour minimiser les écarts entre les données d'historique mesurées et les réponses correspondantes simulées à partir du modèle. Les paramètres peuvent être liés à des régions géographiques comme les perméabilités ou porosités autour d'un puits ou plusieurs puits. L'écart entre données réelles et réponses simulées forme une fonctionnelle, dite fonction objectif. Le problème du calage d'historique se résout en minimisant cette fonctionnelle.

Plusieurs types de méthodes existent pour minimiser cette fonctionnelle. Certaines nécessitent de considérer dans la fonction objectif toutes les données dynamiques disponibles au cours du temps. L'intégration de nouvelles données nécessite donc de reconsidérer tout l'historique de production lors des simulations de réservoir, ce qui peut s'avérer long en temps de calcul. De plus, ces données sont parfois acquises en temps réel. Des méthodes de calage d'historique ont donc été développées, qui permettent d'intégrer de nouvelles données dynamiques dans les modèles de réservoir dès leur acquisition, en ne simulant que la période de temps depuis la dernière acquisition. Ces méthodes sont dites séquentielles. Parmi elles, la méthode des filtres de Kalman d'Ensemble (EnKF) est très utilisée en ingénierie de réservoir :

- Evensen, G., 2007, Data assimilation: The ensemble Kalman filter, Berlin, Germany, Springer.

Cette méthode s'applique à un ensemble de modèles du réservoir et fournit un ensemble de modèles calés sur les données dynamiques.

Une méthode de calage historique, pour laquelle est mise en oeuvre une méthode EnKF est décrite dans Seiler et al, 2009: Structural uncertainty modelling and updating by production data integration, SPE Vol.1, pages 1-15.

Lorsque l'on souhaite assimiler de nouvelles données dynamiques avec la méthode EnKF, on se place à un instant donné de l'exploitation du gisement, et on suppose que l'on connaît un ensemble de modèles du réservoir à cet instant. Cet instant peut correspondre à l'état du réservoir avant production ou résulter d'une assimilation précédente. Une simulation de réservoir est ensuite effectuée sur chacun de ces modèles de l'instant considéré jusqu'au temps d'acquisition des nouvelles données. Puis, un filtre est appliqué afin d'ajuster les modèles de réservoir et les obliger à respecter les données mesurées.

Cependant, ce filtre s'applique à l'ensemble des modèles de réservoir et ne garantit pas que les modèles perturbés vérifient le modèle de variabilité spatiale déduit des observations statiques.

Ainsi, l'objet de l'invention concerne une technique permettant de mettre à jour séquentiellement des modèles de réservoir dès que de nouvelles données dynamiques sont disponibles tout en préservant le modèle de variabilité spatiale déduit des observations statiques. Cette méthode repose sur l'application de la méthode des filtres de Kalman d'ensemble à des paramètres permettant de perturber des modèles de réservoir sans modifier leur cohérence vis-à-vis des données statiques.

**Le procédé selon l'invention**

De façon générale, l'invention concerne un procédé d'exploitation d'un gisement pétrolier selon un schéma d'exploitation défini à partir d'une représentation dudit gisement, ladite représentation comportant un maillage associé à des cartes de propriétés pétrophysique dudit gisement, chaque carte étant une réalisation d'une même fonction aléatoire obtenue au moyen d'une simulation stochastique, dans lequel on acquiert des données dynamiques en cours d'exploitation dudit gisement, et l'on modifie lesdites cartes de façon à minimiser une différence entre lesdites données dynamiques et des données dynamiques simulées au moyen de ladite représentation du gisement et d'un simulateur d'écoulement. Le procédé comporte les étapes suivantes :

- on choisit une méthode de perturbation à P paramètres de perturbation, permettant de perturber lesdites cartes tout en s'assurant que chaque carte perturbée reste une réalisation de ladite fonction aléatoire ;
- on modifie lesdits paramètres en appliquant une méthode de filtre de Kalman d'Ensemble (EnKF) auxdits paramètres de perturbation et auxdites données dynamiques simulées ;
- on modifie lesdites cartes en appliquant ladite méthode de perturbation avec lesdits paramètres ainsi modifiés ;
- on adapte ledit schéma d'exploitation du gisement en tenant compte desdites cartes modifiée ; et
- on exploite ledit gisement en mettant en oeuvre ledit schéma d'exploitation modifié.

Selon l'invention la méthode de perturbation peut être choisie parmi l'une des méthodes suivantes :

- la méthode des déformations graduelles ;
- la méthode des points pilotes ;

- la méthode de perturbation des probabilités ; et
- la méthode de perturbation par cosimulation.

Selon un mode de réalisation, la méthode de perturbation est la méthode des déformations graduelles et l'on perturbe des bruits blancs Gaussiens à partir desquels on génère lesdites cartes de propriétés pétrophysique dudit gisement.

Selon un autre mode de réalisation, la méthode de perturbation est la méthode des déformations graduelles et l'on perturbe des réalisations d'une fonction aléatoire Gaussienne centrée réduite, et l'on utilise des méthodes de Gaussienne tronquée et de pluriGaussienne pour en déduire des réalisations en faciès.

Selon ces deux modes de réalisation, la méthode de perturbation peut être la méthode des déformations graduelles locales.

D'autres caractéristiques et avantages du procédé selon l'invention, apparaîtront à la lecture de la description ci-après d'exemples non limitatifs de réalisations, en se référant aux figures annexées et décrites ci-après.

## Présentation succincte des figures

- la figure 1 illustre le procédé d'exploitation d'un gisement pétrolier selon l'invention.

- La figure 2 illustre l'étape de calage d'historique selon la méthode.

- la figure 3 illustre un cas d'application de la méthode dans le cas d'une perturbation obtenue par déformation graduelle.

- la figure 4 illustre un cas d'application de la méthode dans le cas d'une perturbation par la technique des points pilotes.

- la figure 5 représente la configuration des points pilotes (en noir) utilisés pour le cas d'application.

- la figure 6 représente les données de production simulées avec l'ensemble des modèles avant calage (en haut) et après calage (en bas) en considérant la méthode EnKF couplée à la technique de déformation graduelle ; les données mesurées sont représentées par la courbe plus large.

- la figure 7 représente les données de production simulées avec l'ensemble des modèles avant calage (en haut) et après calage (en bas) en considérant la méthode EnKF couplée à la technique des points pilotes ; les données mesurées sont représentées par la courbe plus large.

- la figure 8 représente deux modèles de l'ensemble avant calage (en haut) et après calage (en bas) en considérant la méthode EnKF couplée à la technique de déformation graduelle.

- la figure 9 représente deux modèles de l'ensemble avant calage (en haut) et après calage (en bas) en considérant la méthode EnKF couplée à la technique des points pilotes.

## Description détaillée du procédé

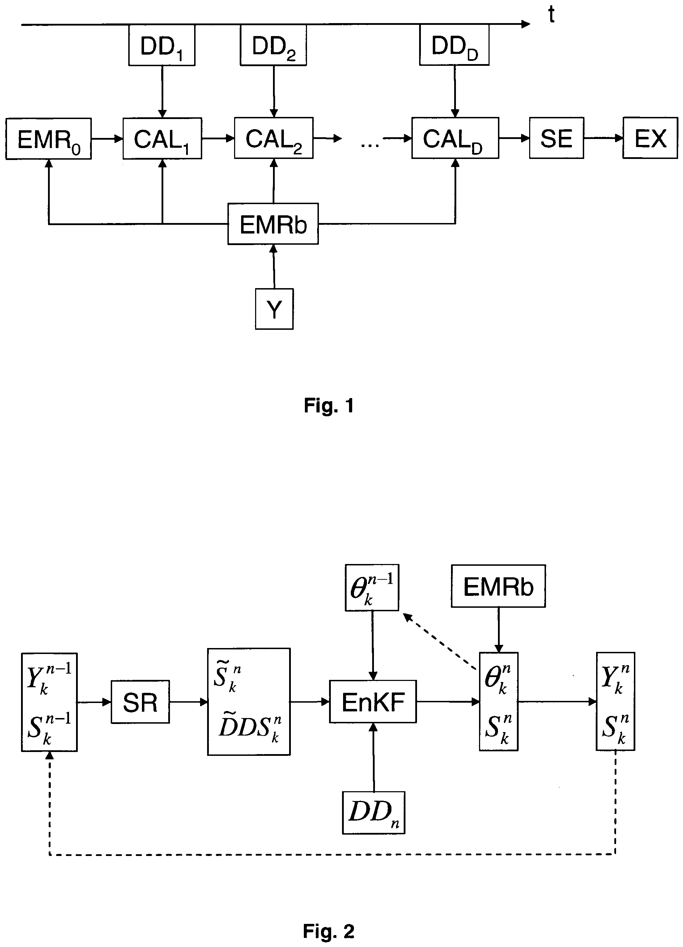

La figure 1 illustre le procédé selon l'invention pour exploiter un gisement pétrolier selon un schéma d'exploitation défini. On dispose d'un ensemble initial de cartes d'une propriété du gisement obtenues au moyen de simulations stochastiques d'une fonction aléatoire. On choisit des paramètres qui, appliqués à cet ensemble, fournissent de nouvelles réalisations de la fonction aléatoire. On crée de nouvelles cartes à l'aide de valeurs initiales de ces paramètres. Dès que de nouvelles données dynamiques sont disponibles, on modifie les paramètres afin de réduire l'écart entre les données simulées pour les modèles perturbés et les données mesurées. Enfin, on exploite le gisement en mettant en oeuvre un schéma d'exploitation modifié pour tenir compte des cartes déformées.

Selon un exemple de réalisation, le procédé comporte cinq étapes :

1. on génère un ensemble de N modèles de réservoir ;

2. on acquiert des données dynamiques ($DD_1$, ...$DD_D$) en cours d'exploitation du gisement ;

3. on réalise des calages d'historique à chaque acquisition ($CAL_1$, ...$CAL_D$) au moyen des étapes suivantes (figure 2) :

- on choisit une méthode de perturbation à P paramètres de perturbation ;

- on modifie les paramètres en appliquant une méthode de filtre de Kalman d'Ensemble (EnKF) ;

- on modifie les modèles de réservoir en appliquant la méthode de perturbation avec les paramètres ainsi modifiés ;

4. on adapte le schéma d'exploitation du gisement en tenant compte des modèles de réservoir modifiés ; et

5. on exploite le gisement en mettant en oeuvre ce schéma d'exploitation modifié.

### 1- Génération d'un ensemble de modèles de réservoir

Cette étape comporte les étapes suivantes :

a. on génère un ensemble de M modèles stochastiques appelé 'ensemble de base' (EMRb) à partir d'une fonction aléatoire (Y) ;
b. on choisit des paramètres de perturbation et on les applique à l'ensemble de base, générant ainsi un ensemble de modèles de réservoirs initiaux ($EMR_0$) :

i. on choisit P paramètres permettant de perturber une réalisation de Y tout en s'assurant que la réalisation obtenue après perturbation reste une réalisation de Y ; on génère N jeux de valeurs initiales de ces P paramètres ($PAR_0$) ;

ii. on applique ces valeurs initiales à l'ensemble de base selon la technique de paramétrisation choisie ; on obtient un ensemble de N modèles de réservoir à l'instant initial ($EMR_0$).

#### a. Génération de l'ensemble de base (EMRb)

Les formations géologiques sont en général des milieux très hétérogènes. La modélisation d'un réservoir, c'est-à-dire la construction d'un modèle de réservoir représentatif du réservoir, nécessite de recourir à des procédés de construction dits « probabilistes » du fait de la limitation de l'information disponible (nombre de puits restreint, ...). De ce fait, on recourt à des méthodes probabilistes pour construire des modèles géologiques. Ces modèles sont appelés « modèles stochastiques ». La construction d'un modèle stochastique de réservoir doit d'abord dépendre de l'environnement du dépôt géologique, ce qui permet de représenter les hétérogénéités majeures qui contrôlent l'écoulement des fluides. L'intégration des données statiques dans ce modèle passe par des opérations linéaires et peut se faire à partir de techniques géostatistiques bien connues des spécialistes.
Un modèle de réservoir, représenté sur un ordinateur, consiste en une grille à N dimensions (N>0 et en général égale deux ou trois) dont chacune des mailles se voit affecter la valeur d'une propriété caractéristique de la zone étudiée. Il peut s'agir par exemple de la porosité ou de la perméabilité distribuée dans un réservoir. Ces valeurs constituent des cartes. Ainsi, un modèle est une grille associée à au moins une carte.
La valeur d'une propriété caractéristique de la zone étudiée est appelée variable régionalisée. Il s'agit d'une variable continue, distribuée dans l'espace, et représentative d'un phénomène physique. Du point de vue mathématique, il s'agit simplement d'une fonction z(u) prenant une valeur en chaque point u (la maille de la grille) d'un domaine d'étude D (la grille représentative du réservoir). Toutefois, la variation de la variable régionalisée dans cet espace est trop irrégulière pour pouvoir être formalisée par une équation mathématique. En fait, la variable régionalisée représentée par z(u) possède à la fois un aspect global, relatif à la structure spatiale du phénomène étudié, et un aspect local aléatoire.
Ce dernier aspect, local aléatoire, peut être modélisé par une variable aléatoire (VA). Une variable aléatoire est une variable qui peut prendre un certain nombre de réalisations z suivant une certaine loi de probabilité. Des variables continues telles que des attributs sismiques (impédance acoustique) ou des propriétés pétrophysiques (saturation, porosité, perméabilité) peuvent être modélisées par des VA. De ce fait, au point u, la variable régionalisée z(u) peut être considérée comme la réalisation d'une variable aléatoire Z.
Cependant, pour représenter correctement la variabilité spatiale de la variable régionalisée, il faut pouvoir prendre en compte le double aspect, à la fois aléatoire et structuré. Une des approches possibles, de type probabiliste, fait appel à la notion de fonction aléatoire. Une fonction aléatoire (FA) est un ensemble de variables aléatoires (VA) définies sur un domaine d'étude D (la grille représentative du réservoir), c'est-à-dire {Z(u), u e D}, également noté Z(u). Ainsi, tout groupe de valeurs échantillonnées {z(u1), ...,z(un)} peut être considéré comme une réalisation particulière de la fonction aléatoire Z(u) = {Z(u1),...,Z(un)}. La FA Z(u) permet de prendre en compte à la fois l'aspect localement aléatoire (en u*, la variable régionalisée z(u*) étant une VA) et l'aspect structuré (via la loi de probabilité spatiale associée à la FA Z(u)).

Les réalisations d'une fonction aléatoire fournissent des modèles stochastiques de réservoir. A partir de tels modèles, il est possible d'apprécier le mode de fonctionnement de la zone souterraine étudiée. Par exemple, la simulation des écoulements dans un milieu poreux représenté par des modèles stochastiques numériques, permet entre autre, de prédire la production du réservoir et ainsi d'optimiser son exploitation en testant différents scénarios de production.

Le modèle de réservoir constitue une représentation du gisement. Il comporte un maillage associé à au moins une carte d'une propriété caractéristique du gisement. Cette carte est obtenue au moyen d'une simulation stochastique d'une première fonction aléatoire. Cette dernière étape peut être décrite de la façon suivante :

- Tout d'abord, on mesure sur le terrain d'une part, des données statiques (diagraphies, mesures sur des échantillons prélevés dans les puits, sismique...).

- Puis, à partir des données statiques, on définit une fonction aléatoire, caractérisée par sa fonction de covariance (ou de façon analogue par son variogramme), sa variance et sa moyenne.

- Par ailleurs, on définit un ensemble de nombres aléatoires tirés indépendamment les uns des autres : il peut s'agir, par exemple, d'un bruit blanc Gaussien ou de nombres uniformes. Il existe donc un nombre aléatoire indépendant par maille et par réalisation.

- A partir d'un simulateur géostatistique choisi, et du jeu de nombres aléatoires, un tirage aléatoire dans la fonction aléatoire est effectué, donnant accès à une réalisation (continue ou discrète) représentant une image possible du réservoir. Classiquement, le tirage aléatoire est fait dans un cadre hiérarchique. En premier lieu, le modèle de réservoir est peuplé aléatoirement par une réalisation de la fonction aléatoire associée aux faciès, conditionnellement aux mesures de faciès effectuées ponctuellement. Puis, la porosité est générée aléatoirement sur chacun des faciès, conditionnellement aux données de porosité obtenues sur le faciès considéré. Ensuite, on simule la perméabilité horizontale selon sa fonction aléatoire associée, conditionnellement aux faciès et aux porosités tirées précédemment, ainsi qu'aux mesures de perméabilité effectuées sur le terrain. Enfin, on peuple le modèle de réservoir par une réalisation aléatoire de la perméabilité verticale conditionnellement à toutes les simulations précédentes et aux données de perméabilité obtenues ponctuellement.

- Considérant plusieurs jeux de nombres aléatoires, on obtient un ensemble de réalisations représentant plusieurs images possibles du réservoir.

### b. Génération de l'ensemble de modèles de réservoir à l'instant initial (EMRO)

Différentes techniques de perturbation permettent de modifier la réalisation d'une fonction aléatoire tout en assurant le fait que la réalisation perturbée est aussi une réalisation de cette même fonction aléatoire. Parmi ces techniques, on peut citer la méthode des points pilotes développée par RamaRao et al. (1995) et Gomez-Hernandez et al. (1997), la méthode des déformations graduelles proposée par Hu (2000) et la méthode de perturbation des probabilités introduite par Caers (2003).

- RamaRao, B.S, Lavenue, A.M., Marsilly, G. de, Marietta, M.G., 1995, Pilot point methodology for automated calibration of an ensemble of conditionally simulated transmissivity fields. 1. Theory and computational experiments. WRR, 31 (3), 475-493.

- Gomez-Hernandez, J., Sahuquillo, A., et Capilla, J.E., 1997, Stochastic simulation of transmissivity fields conditional to both transmissivity and piezometric data, 1. Theory, J. of Hydrology, 203, 162-174.

- Hu, L-Y., 2000, Graduai Deformation and iterative calibration of Gaussian-related stochastic models, Math. Geol., 32(1), 87-108.

- Caers, J., 2003, Geostatistical history matching under training-image based geological constraints. SPE J. 8(3), 218-226.

On peut également citer la méthode de perturbation des probabilités ou encore la méthode de perturbation par cosimulation.

On suppose ici que l'on a créé un ensemble de M modèles $\tilde{Y}_j^0$, $j = 1..M$, appelé 'ensemble de base', à partir d'une fonction aléatoire Y. Puis :

- on choisit une technique de perturbation.
- on sélectionne P paramètres de perturbation associés à la technique choisie et on génère N ensembles de valeurs pour ces paramètres $\theta_k^0 = (\theta_{k,1}^0, ..., \theta_{k,P}^0)$, k=1..N (PAR$_0$).
- on applique la technique de paramétrisation à l'ensemble de base, en utilisant successivement les N jeux de paramètres ; on crée ainsi un ensemble de N modèles de réservoir initiaux $Y_k^0$, k = 1..N (EMR$_0$).

<u>Perturbation par la méthode de déformation graduelle</u>

Dans le cas de la déformation graduelle, les paramètres sont les P=M-1 paramètres de déformation graduelle utilisés pour combiner les M modèles de l'ensemble de base selon la formulation

$$Y_k^0 = \prod_{j=1}^{M-1} \tilde{Y}_1 \cos(\pi\theta_{k,j}) + \sum_{i+1}^{M-1} \tilde{Y}_{i+1} \sin(\pi\theta_{k,j}) \prod_{j=i+1}^{M-1} \cos(\pi\theta_{k,j}),$$

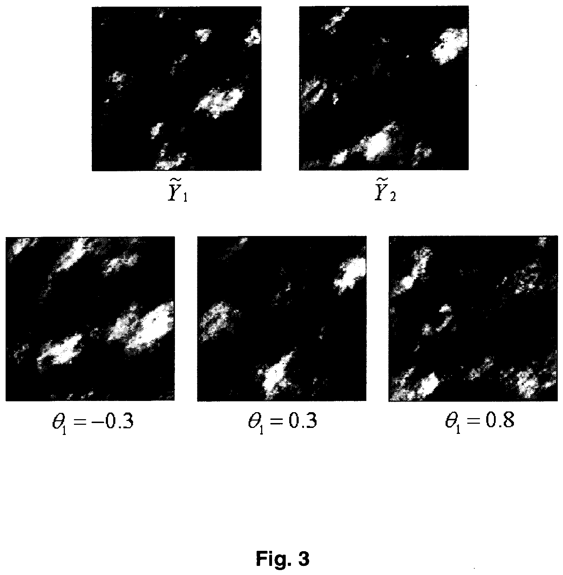

k = 1...N. Les valeurs initiales des paramètres de déformation graduelle sont générées aléatoirement. La figure 3 montre trois réalisations obtenues avec $\theta_1$ = -0,3, $\theta_1$ = 0,3 et $\theta_1$ = 0,8, et à partir d'un ensemble de base contenant deux modèles $\tilde{Y}_1$ et $\tilde{Y}_2$.

<u>Perturbation par la méthode des points pilotes</u>

Dans le cas des points pilotes, l'ensemble de base contient M=N modèles. Les paramètres sont les valeurs imposées par krigeage à ces modèles à l'emplacement de P points pilotes (ou mailles de la grille) :
Goovaerts, P., 1997, Geostatistics for natural resources evaluation, Oxford University Press, New York, USA.
Les points pilotes doivent être espacés d'au moins une longueur de corrélation. Les valeurs initiales des paramètres peuvent être extraites des modèles de base. Elles peuvent aussi être générées aléatoirement.

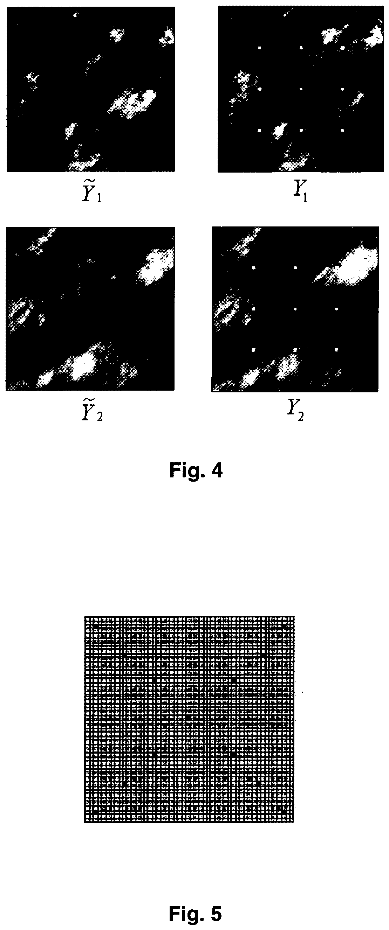

La figure 4 montre deux réalisations $Y_1$ et $Y_2$ avant et après perturbation en 9 points pilotes (points blancs sur les figures de droite) dont l'emplacement est indiqué par des points blancs.

**2- Acquisition de données dynamiques** (DD$_1$, ...DD$_D$)

A ce stade, les données dynamiques n'ont pas été considérées pour construire les modèles de réservoir. On acquiert donc des données dynamiques en cours d'exploitation du gisement. Il s'agit de données de production, d'essais de puits, de temps de percée, de sismique 4D... dont la particularité est de varier au cours du temps en fonction des écoulements de fluide dans le réservoir.
Cette étape est réalisée au moyen d'outils de mesure tels que des débitmètres ou des campagnes sismiques.
L'intégration des données dynamiques dans les modèles de réservoir passe par une série d'étapes d'assimilation des données. Les modèles sont ajustés successivement de façon à réduire l'écart entre les données dynamiques nouvellement collectées sur le terrain et les réponses correspondantes simulées pour les modèles considérés. Cette série d'étapes constitue la base du calage d'historique.

**3- Calage d'historique** (CAL$_1$, ...CAL$_D$)

On réalise les calages d'historique (figure 2) au moyen des étapes suivantes :

- on choisit une méthode de perturbation à P paramètres de perturbation $\theta_k^{n-1}$ ;
- on modifie les paramètres en appliquant une méthode de filtres de Kalman d'Ensemble (EnKF) ;
- on modifie les modèles en appliquant la méthode de perturbation avec les paramètres ainsi modifiés ;

Le calage se base donc sur une application nouvelle du filtre de Kalman d'Ensemble (EnKF).

La méthode des filtres de Kalman d'Ensemble est une méthode d'assimilation séquentielle de données. Il s'agit d'une variante du filtre de Kalman, permettant de contraindre en temps réel l'état dynamique d'un système aux observations dynamiques. Le filtre de Kalman s'applique à des systèmes dynamiques linéaires :

- Kalman, R., 1960, A new approach to linear filtering and prédiction problems, Transactions of ASME, Journal of Basic Engineering, 82, 35-45.

Le filtre de Kalman d'Ensemble étend la méthode au cas de systèmes dynamiques non linéaires comme l'écoulement des fluides en milieu poreux, phénomène régissant l'évolution d'un réservoir au cours du temps :

- Evensen, G., 2007, Data assimilation: The ensemble Kalman filter, Berlin, Germany, Springer.

La méthode des filtres de Kalman d'Ensemble consiste à contraindre en temps réel un ensemble de modèles du réservoir à chaque nouvelle mesure dynamique acquise sur le terrain, sans reconsidérer les données précédemment acquises. Elle se décompose en deux étapes, appliquées entre deux acquisitions successives de données aux temps $t_i$ et $t_{i+1}$ : l'ébauche (ou prévision) et la correction (ou analyse).

Lorsque l'on souhaite assimiler de nouvelles données dynamiques avec la méthode EnKF, on se place à un instant donné de l'exploitation du gisement, et on suppose que l'on connaît un ensemble de modèles du réservoir à cet instant. Cet instant peut correspondre à l'état du réservoir avant production ou résulter d'une assimilation précédente. Une simulation de réservoir est ensuite effectuée sur chacun de ces modèles de l'instant considéré jusqu'au temps d'acquisition des nouvelles données. Puis, un filtre est appliqué afin d'ajuster les modèles de réservoir et les obliger à respecter les données mesurées. Ce filtre s'applique à l'ensemble des modèles de réservoir et ne garantit pas que les modèles perturbés vérifient le modèle de variabilité spatiale déduit des observations statiques.

Selon l'invention, à chaque nouvelle acquisition de données dynamiques ($DD_n$) faite au temps $t_n$, n>1, on dispose d'un ensemble de modèles du réservoir $Y_k^{n-1}$, $k$ = 1..$N$ (porosité, perméabilité) et de l'état dynamique correspondant $S_k^{n-1}$, $k$ = 1..$N$ (pression, saturation) à un instant donné $t_{n-1}$ précédant $t_n$. Cet état dynamique peut être l'état du réservoir avant production (EI) ou résulter d'une assimilation ($DD_{n-1}$).

Puis, pour chaque modèle de réservoir $Y_k^{n-1}$, on effectue une simulation de réservoir (SR), au moyen d'un logiciel appelé simulateur de réservoir, entre les temps $t_{n-1}$ et $t_n$ à partir de l'état dynamique $S_k^{n-1}$. On obtient l'état dynamique du réservoir $\tilde{S}_k^n$ au temps $t_n$ et les réponses dynamiques simulées correspondantes $\tilde{DDS}_k^n$.

Puis, afin de caler les modèles sur les données dynamiques mesurées au temps $t_n$, on modifie les paramètres de perturbation en appliquant une méthode de filtre de Kalman d'Ensemble (EnKF) à un ensemble d'états comportant les paramètres de perturbation et les données dynamiques simulées : $\theta_k^{n-1}$, $\tilde{DDS}_k^n$. Selon un mode de réalisation, on applique le filtre de Kalman d'ensemble (EnKF) à l'ensemble d'états suivant : $\theta_k^{n-1}$, $\tilde{S}_k^n$, $\tilde{DDS}_k^n$. Cela revient à minimiser l'erreur entre les données dynamiques mesurées $DD_n$ et les réponses simulées correspondantes $\tilde{DDS}_k^n$.

Pour cela, on applique un ensemble de perturbations $(\gamma_k^n)_{k=1..N}$ aux données mesurées $DD_n$, créant ainsi un ensemble de données bruitées $DDb_k^n = DD_n + \gamma_k^n$.

On note :

- $A = \left(\theta_k^{n-1}, \tilde{S}_k^n, \tilde{DDS}_k^n\right)_{k=1...N}$ le vecteur comprenant l'ensemble d'états au temps $t_n$

- $DDb = \left(DDb_k^n\right)_{k=1..N}$ l'ensemble des mesures bruitées,

- les modèles corrigés $A_{corrigé} = \left(\theta_k^n, S_k^n, DDS_k^n\right)_{k=1...N}$ sont donnés par :

$$A_{corrigé} = A + CH^T (HCH^T + C_{erreur})^{-1} (DDb - HA)$$

C représente la matrice de covariance de l'ensemble d'états, $C_{erreur}$ la matrice de covariance de l'erreur sur les mesures et $H$ l'opérateur de mesure permettant d'extraire de chaque modèle les données simulées :

$$C = \frac{A'(A')^T}{N-1}, \quad A' = A - A \times 1_N, \quad 1_N = \begin{pmatrix} 1/N & L & 1/N \\ M & O & M \\ 1/N & L & 1/N \end{pmatrix} \in \mathbf{R}^{N \times N}$$

$$C_{erreur} = \frac{\gamma\gamma^T}{N-1}$$

$$HA = \left( \tilde{D}DS_k^n \right)_{k=1...N}$$

La méthode des filtres de Kalman d'ensemble fournit ainsi un ensemble de modèles contraints aux données dynamiques.

On obtient ainsi un nouvel ensemble de paramètres $\theta_k^n$ et d'états dynamiques $S_k^n$ au temps $t_n$. On déduit le nouvel ensemble de modèles de réservoir $Y_k^n$ en perturbant les modèles de l'ensemble de base avec les nouveaux jeux de paramètres $\theta_k^n$ (EMR$_n$).

En appliquant le filtre aux paramètres de perturbation, on assure un calage, et la garantie que les modèles perturbés vérifient le modèle de variabilité spatiale déduit des observations statiques (fonction aléatoire).

**5- Exploitation du gisement selon un schéma d'exploitation adapté** (EX - SE)

A partir d'un tel ensemble de modèles de réservoir calés par les données dynamiques, les spécialistes définissent ou adaptent un schéma d'exploitation. En effet, puisque les modèles de réservoir sont représentatifs de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes.

On exploite alors le gisement selon ce schéma d'exploitation adapté aux modèles de réservoir issus du calage d'historique.

**Variantes**

Perturbations des faciès par la méthode de déformation graduelle

Il est possible d'appliquer la méthode décrite précédemment pour les déformations graduelles non pas à des réalisations pétrophysiques mais à des réalisations d'une fonction aléatoire Gaussienne centrée réduite. Ceci permet notamment d'appliquer les méthodes de la Gaussienne tronquée et de la pluriGaussienne pour en déduire des réalisations en faciès.

- Goovaerts,P., 1997, Geostatistics for natural resources evaluation, Oxford Press, New York, 483 p.

Dans ce cas, l'ensemble de base contient donc un ensemble de réalisations d'une fonction aléatoire Gaussienne centrée réduite. Après application de la technique de paramétrage à cet ensemble, une étape de troncature est nécessaire pour en déduire les réalisations en faciès.

## Perturbations de bruits blancs Gaussiens par la méthode de déformation graduelle

Il est possible d'appliquer la méthode décrite précédemment pour les déformations graduelles non pas à des réalisations pétrophysiques mais à des bruits blancs Gaussiens. Ceci permet notamment de réaliser des déformations graduelles locales. Dans ce cas, l'ensemble de base contient donc un ensemble de bruits blancs Gaussiens. Après application de la technique de paramétrage à cet ensemble, un algorithme de simulation géostatistique comme la méthode FFT-MA peut ensuite être appliqué pour générer les réalisations des propriétés pétrophysiques.

- Le Ravalec, M., Noetinger B., and Hu L.-Y., 2000, The FFT moving average (FFT-MA) generator: an efficient numerical method for generating and conditioning Gaussian simulations, Mathematical Geology, 32(6), 701-723.

## Perturbations par la méthode de déformation graduelle locale

Il est possible d'appliquer la méthode décrite précédemment en considérant des déformations graduelles locales, en considérant dans l'ensemble de base des bruits blancs Gaussiens. Dans ce cas, on définit R régions du réservoir ne se chevauchant pas et on génère dans chacune de ces régions M-1 paramètres locaux de déformation graduelle. La combinaison des modèles de l'ensemble de base se fait comme précédemment, la valeur des paramètres utilisée dépendant de la région dans laquelle on se place.

## Perturbations par la méthode de déformation graduelle locale

Il est possible d'appliquer la méthode décrite précédemment en considérant des déformations graduelles locales. Dans ce cas, on définit R régions du réservoir ne se chevauchant pas et on génère dans chacune de ces régions M-1 paramètres locaux de déformation graduelle. La combinaison des modèles de l'ensemble de base se fait comme précédemment, la valeur des paramètres utilisée dépendant de la région dans laquelle on se place.

## Exemple d'application

Pour illustrer la méthode, on décrit un cas d'application synthétique. Le réservoir contient un faciès de porosité constante. La distribution des perméabilités horizontales dans le réservoir est inconnue. Le champ contient de l'huile et de l'eau. Il est produit à partir de 4 producteurs situés aux coins du réservoir. De l'eau est injectée dans un puits foré au centre du réservoir. Le débit d'injection est de 40 $m^3$/jour pendant 3 mois, puis de 50 $m^3$/jour pendant 5 mois, et enfin de 60 $m^3$/jour pendant 10 mois. Un débit de production d'huile de 10 $m^3$/jour est imposé à chaque producteur. Au cours de ces 17 mois, des données de pression (BHFP), de débit d'huile (QOS) et de quantité relative d'eau produite (W CUT) sont collectées dans les puits producteurs.

Il s'agit alors de construire, en utilisant la méthode EnKF combinée aux techniques de paramétrisation par déformation graduelle et points pilotes, un modèle géologique reproduisant ces données, c'est-à-dire une grille 3D avec des valeurs de perméabilité horizontale attribuées à chaque maille. L'organisation des différentes étapes de la méthode est illustrée par les figures 1 et 2.

## Création de l'ensemble de base

La perméabilité horizontale est considérée comme une variable aléatoire après transformation logarithmique, de moyenne 5, de variance 2.5 et de variogramme sphérique. Les longueurs de corrélation sont de 200m et 40m. On utilise l'algorithme FFT-MA pour simuler un ensemble de base de M modèles de logarithme de perméabilité, en faisant varier le jeu de nombres aléatoires sous-jacent d'un modèle à l'autre.

## Choix des paramètres et génération de l'ensemble initial

Les deux techniques de paramétrisation ont été considérées. La taille de l'ensemble de modèles initiaux est N=50.

1. Perturbation par déformation graduelle

On considère un ensemble de base contenant chacun M=2500 modèles. On génère ensuite N=50 jeux de M-1 paramètres de déformation globale.

2. Perturbation par points pilotes

La distribution des 13 points pilotes dans le réservoir est donnée sur la figure 5 (points noirs sur la figure). Ils sont placés aux puits ainsi que le long des principales directions du flux. On considère ici un ensemble de base de M=N=50 modèles.

Calage d'historique

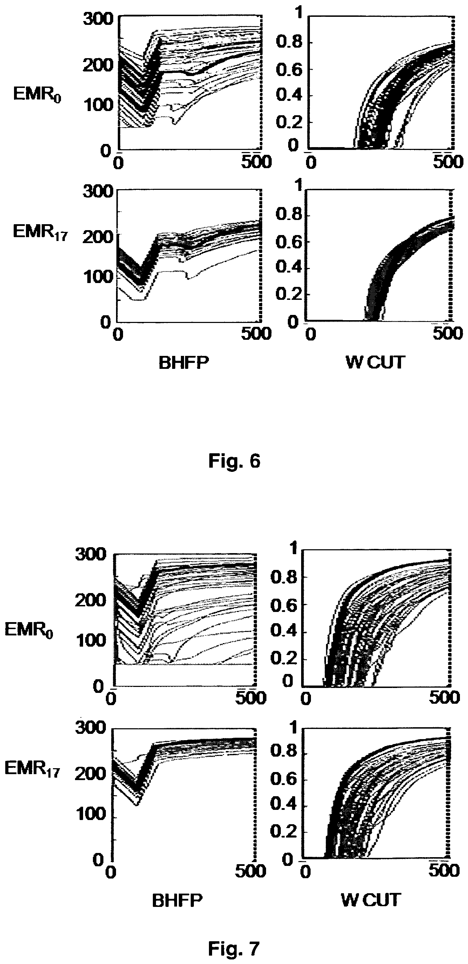

Les données dynamiques sont assimilées au début de chaque mois, résultant en 17 assimilations successives. Des simulations de réservoir sont ensuite réalisées sur les modèles obtenus après calage afin d'estimer l'efficacité de la méthode en termes de calage et prédiction. Les résultats à l'un des puits producteurs sont visibles sur la figure 6 pour la déformation graduelle et la figure 7 pour les points pilotes, considérant les modèles avant et après calage.

La figure 6 illustre à gauche la pression de fond (BHFP en bar) en fonction du temps en jour (en abscisse), et à droite le "water cut" (WCUT) en fonction du temps en jour (en abscisse). Les figures du haut illustrent les résultats obtenus pour les modèles de réservoir de l'ensemble initial ($EMR_0$). Ces résultats sont en gris, la courbe noire et plus large correspondant aux données de référence. Les figures du bas illustrent les résultats obtenus pour les modèles de réservoir de l'ensemble final, après 17 calages ($EMR_{17}$). Ces résultats sont en gris, la courbe noire et plus large correspondant aux données de référence.

La figure 7 illustre les mêmes résultats que la figure 6 dans le cadre de l'utilisation des points pilotes.

On peut donc voir que les données simulées avec les différents ensembles après calage sont plus proches les unes des autres que celles simulées avec l'ensemble initial. Elles sont également plus proches des données mesurées.

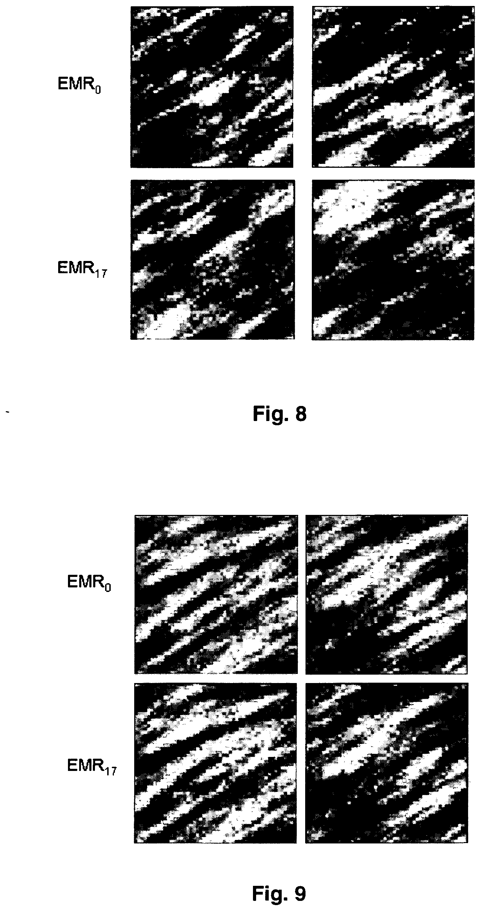

Des modèles de réservoir avant ($EMR_0$) après calage ($EMR_{17}$) sont visibles sur les figures 8 et 9 respectivement pour la déformation graduelle et les points pilotes. Les modèles perturbés sont tout à fait réalistes vis-à-vis des caractéristiques de la fonction aléatoire sous-jacente.

**Revendications**

**1.** Procédé d'exploitation d'un gisement pétrolier selon un schéma d'exploitation défini à partir d'une représentation dudit gisement, ladite représentation comportant un maillage associé à des cartes de propriétés pétrophysique dudit gisement, chaque carte étant une réalisation d'une même fonction aléatoire obtenue au moyen d'une simulation stochastique, dans lequel on acquiert des données dynamiques en cours d'exploitation dudit gisement, et l'on modifie lesdites cartes de façon à minimiser une différence entre lesdites données dynamiques et des données dynamiques simulées au moyen de ladite représentation du gisement et d'un simulateur d'écoulement, **caractérisé en ce que** l'on réalise les étapes suivantes :

- on choisit une méthode de perturbation à P paramètres de perturbation, permettant de perturber lesdites cartes tout en s'assurant que chaque carte perturbée reste une réalisation de ladite fonction aléatoire ;
- on modifie lesdits paramètres en appliquant une méthode de filtre de Kalman d'Ensemble (EnKF) auxdits paramètres de perturbation et auxdites données dynamiques simulées ;
- on modifie lesdites cartes en appliquant ladite méthode de perturbation avec lesdits paramètres ainsi modifiés ;
- on adapte ledit schéma d'exploitation du gisement en tenant compte desdites cartes modifiée ; et
- on exploite ledit gisement en mettant en oeuvre ledit schéma d'exploitation modifié.

**2.** Procédé selon la revendication 1, dans laquelle la méthode de perturbation est choisie parmi l'une des méthodes suivantes :

- la méthode des déformations graduelles ;
- la méthode des points pilotes ;
- la méthode de perturbation des probabilités ; et
- la méthode de perturbation par cosimulation.

**3.** Procédé selon la revendication 2, dans laquelle la méthode de perturbation est la méthode des déformations graduelles et l'on perturbe des bruits blancs Gaussiens à partir desquels on génère lesdites cartes de propriétés pétrophysique dudit gisement.

**4.** Procédé selon la revendication 2, dans laquelle la méthode de perturbation est la méthode des déformations graduelles et l'on perturbe des réalisations d'une fonction aléatoire Gaussienne centrée réduite, et l'on utilise des méthodes de Gaussienne tronquée et de pluriGaussienne pour en déduire des réalisations en faciès.

5. Procédé selon l'une des revendications 3 à 4, dans laquelle la méthode de perturbation est la méthode des déformations graduelles locales.

**Patentansprüche**

1. Verfahren zur Ausbeutung einer Erdöllagerstätte nach einem Ausbeutungsschema, das auf Basis einer Darstellung der Lagerstätte definiert wird, wobei die Darstellung ein Netzwerk umfasst, das Karten von petrophysikalischen Eigenschaften der Lagerstätte zugeordnet ist, wobei jede Karte eine Verwirklichung einer selben Zufallsfunktion ist, die mit Hilfe einer stochastischen Simulation erhalten wird, wobei dynamische Daten während der Ausbeutung der Lagerstätte erfasst werden, und die Karten derart verändert werden, dass ein Unterschied zwischen den dynamischen Daten und mit Hilfe der Darstellung der Lagerstätte und eines Strömungssimulators simulierten dynamischen Daten minimiert wird, **dadurch gekennzeichnet, dass** die folgenden Schritte durchgeführt werden:

- Auswahl einer Störmethode P mit P Störparametern, die es ermöglicht, die Karten zu stören, wobei sichergestellt wird, dass jede gestörte Karte eine Verwirklichung der Zufallsfunktion ist;
- Veränderung der Parameter, wobei eine Kalman-Gesamtfiltermethode (EnKF) an den Störparametern und an den simulierten dynamischen Daten angewandt wird;
- Veränderung der Karten, wobei die Störmethode mit den so veränderten Parametern angewandt wird;
- Anpassung des Ausbeutungsschemas der Lagerstätte, wobei die veränderten Karten berücksichtigt werden; und
- Ausbeutung der Lagerstätte, wobei das veränderte Ausbeutungsschema angewandt wird.

2. Verfahren nach Anspruch 1, bei dem die Störmethode unter einer der folgenden Methoden ausgewählt ist:

- der Methode der graduellen Verformungen;
- der Methode der Pilotpunkte;
- der Störmethode der Wahrscheinlichkeiten; und
- der Störmethode durch Co-Simulation.

3. Verfahren nach Anspruch 2, bei dem die Störmethode die Methode der graduellen Verformungen ist, und weißes Gauss-förmiges Rauschen gestört wird, auf dessen Basis die Karten von petrophysikalischen Eigenschaften der Lagerstätte erzeugt werden.

4. Verfahren nach Anspruch 2, bei der die Störmethode die Methode der graduellen Verformungen ist, und Verwirklichungen einer reduzierten zentrierten Gaussförmigen Zufallsfunktion gestört werden, und Methoden einer gekürzten Gauss-Funktion oder einer Pluri-Gauss-Funktion verwendet werden, um davon Verwirklichungen in Fazies abzuleiten.

5. Verfahren nach einem der Ansprüche 3 bis 4, bei dem die Störmethode die Methode der lokalen graduellen Verformungen ist.

**Claims**

1. A method of developing a petroleum reservoir according to a development scheme defined from a representation of said reservoir, said representation comprising a grid associated with maps of petrophysical properties of said reservoir, each map being a realization of the same random function obtained by means of a stochastic simulation, wherein dynamic data are acquired during the development of said reservoir, and said maps are modified so as to minimize a difference between said dynamic data and dynamic data simulated by means of said reservoir representation and of a flow simulator, **characterized in that** the following steps are carried out:

- selecting a perturbation method with P perturbation parameters, allowing to perturb said maps while ensuring that each perturbed map remains a realization of said random function,
- modifying said parameters by applying an Ensemble Kalman Filter (EnKF) method to said perturbation parameters and to said simulated dynamic data,
- modifying said maps by applying said perturbation method with said parameters thus modified,
- adjusting said reservoir development scheme by taking account of said modified maps, and
- developing said reservoir by implementing said modified development scheme.

2. A method as claimed in claim 1, wherein the perturbation method is selected from among one of the following methods:

   - the gradual deformation method
   - the pilot point method
   - the probability perturbation method, and
   - the cosimulation perturbation method.

3. A method as claimed in claim 2, wherein the perturbation method is the gradual deformation method and wherein Gaussian white noises from which said petrophysical property maps of said reservoir are generated are perturbed.

4. A method as claimed in claim 2, wherein the perturbation method is the gradual deformation method, realizations of a reduced centered Gaussian random function are perturbed, and truncated Gaussian and pluriGaussian methods are used to deduce facies realizations.

5. A method as claimed in any one of claims 3 and 4, wherein the perturbation method is the local gradual deformation method.

**Fig. 1**

**Fig. 2**

14

$\widetilde{Y}_1$ $\qquad$ $\widetilde{Y}_2$

$\theta_1 = -0.3$ $\qquad$ $\theta_1 = 0.3$ $\qquad$ $\theta_1 = 0.8$

**Fig. 3**

$\widetilde{Y}_1$          $Y_1$

$\widetilde{Y}_2$          $Y_2$

**Fig. 4**

**Fig. 5**

Fig. 6

Fig. 7

EMR$_0$

EMR$_{17}$

**Fig. 8**

EMR$_0$

EMR$_{17}$

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GOOVAERTS,P.** Geostatistics for natural resources evaluation. Oxford Press, 1997, 483
- **LE RAVALEC, M. ; NOETINGER B. ; HU L.-Y.** The FFT moving average (FFT-MA) generator: an efficient numerical method for generating and conditioning Gaussian simulations. *Mathematical Geology,* 2000, vol. 32 (6), 701-723
- **EVENSEN, G.** Data assimilation: The ensemble Kalman filter. Springer, 2007
- **SEILER et al.** Structural uncertainty modelling and updating by production data integration. SPE, 2009, vol. 1, 1-15
- Pilot point methodology for automated calibration of an ensemble of conditionally simulated transmissivity fields. **RAMARAO, B.S ; LAVENUE, A.M. ; MARSILLY, G. DE ; MARIETTA, M.G.** Theory and computational experiments. WRR, 1995, vol. 31, 475-493
- **GOMEZ-HERNANDEZ, J. ; SAHUQUILLO, A. ; CAPILLA, J.E.** Stochastic simulation of transmissivity fields conditional to both transmissivity and piezometric data. *Theory, J. of Hydrology,* 1997, vol. 203, 162-174
- **HU, L-Y.** Graduai Deformation and iterative calibration of Gaussian-related stochastic models. *Math. Geol.,* 2000, vol. 32 (1), 87-108
- **CAERS, J.** Geostatistical history matching under training-image based geological constraints. *SPE J.,* 2003, vol. 8 (3), 218-226
- **GOOVAERTS, P.** Geostatistics for natural resources evaluation. Oxford University Press, 1997
- **KALMAN, R.** A new approach to linear filtering and prédiction problems. *Transactions of ASME, Journal of Basic Engineering,* 1960, vol. 82, 35-45